# FASCICULE DE BREVET EUROPEEN

(11) **EP 3 770 065 B1**
(45) Date de publication et mention de la délivrance du brevet: **22.06.2022**
(21) Numéro de dépôt: 20187005.2
(22) Date de dépôt: 21.07.2020
(51) Int. Cl.: B64C 25/36, B64C 25/42

(54) **ENSEMBLE DE ROUE ET FREIN D'AERONEF**
ANORDNUNG AUS RAD UND BREMSE EINES LUFTFAHRZEUGS
WHEEL AND BRAKE ASSEMBLY FOR AN AIRCRAFT

(30) Priorité: 24.07.2019 FR 1908422
(43) Date de publication de la demande: 27.01.2021
(73) Titulaire: Safran Landing Systems, 78140 Vélizy-Villacoublay (FR)
(72) Inventeur: CHICO, Philippe, 77550 MOISSY-CRAMAYEL (FR)
(74) Mandataire: Lavaud, Thomas

(56) Documents cités:
- EP-A1- 1 886 887
- EP-A1- 3 339 170
- EP-B1- 1 886 887
- CN-A- 106 081 136
- US-A1- 2005 251 306
- US-B1- 9 428 162

## Description

### DOMAINE DE L'INVENTION

L'invention concerne le domaine des ensembles de roue et frein d'aéronef.

### ARRIERE PLAN DE L'INVENTION

Un système de freinage des roues d'un aéronef comprend une pluralité de freins qui équipent chacun une roue dite « freinée » de l'aéronef.

Chaque frein comporte un ou des organes de friction, par exemple une pile de disques de carbone, et un ou plusieurs actionneurs de freinage qui sont montés sur un support d'actionneurs.

Dans le cas d'un système de freinage hydraulique, les actionneurs de freinage sont des actionneurs hydrauliques et le support d'actionneurs est une couronne de freinage (aussi appelée couronne hydraulique).

Dans le cas d'un système de freinage électrique, les actionneurs de freinage sont des actionneurs électromécaniques et le support d'actionneurs est un porte-actionneurs.

Le système de freinage coopère avec un système de surveillance qui, pour chaque ensemble de roue et frein, mesure et surveille certains paramètres de l'ensemble de roue et frein.

Le système de surveillance comporte ainsi classiquement, pour chaque ensemble de roue et frein, un dispositif de mesure de température qui mesure une température de la pile de disques de carbone, un dispositif de mesure de vitesse qui mesure la vitesse de rotation de la roue, et un dispositif de mesure de pression qui mesure la pression régnant dans le pneumatique de la roue.

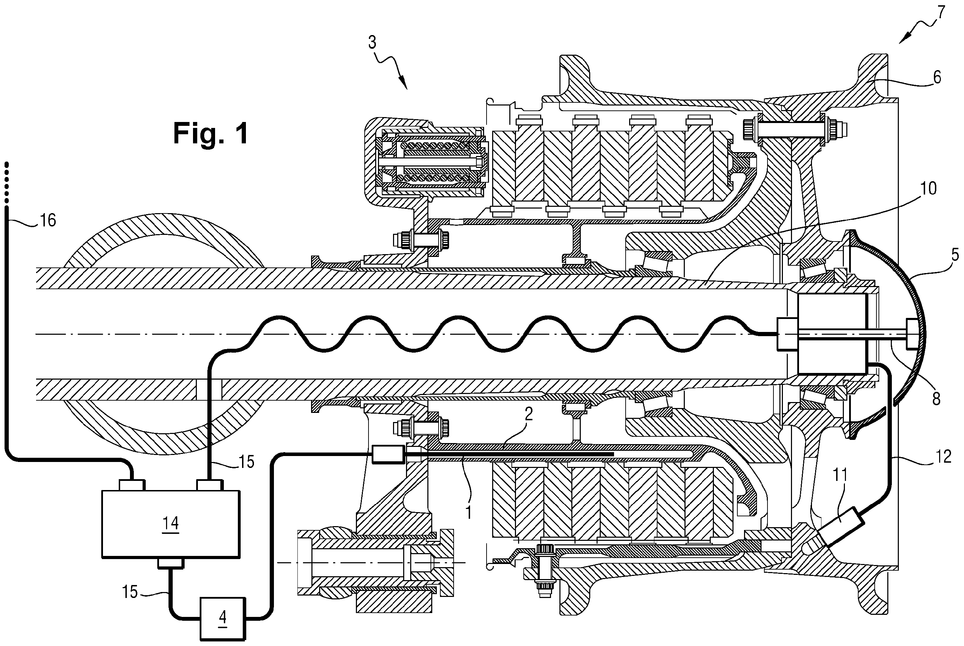

En référence à la figure 1, le dispositif de mesure de température d'un ensemble de roue et frein de l'art antérieur comprend classiquement une sonde thermocouple 1 de type K positionnée dans une cavité du tube de torsion 2 du frein 3. La sonde thermocouple 1 est reliée à un boîtier de compensation 4 qui est situé au bas de l'atterrisseur, ou parfois plus haut sur l'atterrisseur. La jonction entre les fils de cuivre et les fils de chromel et d'« Alumel » (marque déposée) est réalisée dans le boîtier de compensation 4. La température des soudures froides est mesurée dans le boîtier de compensation 4 pour réaliser une compensation en température.

Le dispositif de mesure de vitesse utilise classiquement un capot de roue 5 fixé à la jante 6 de la roue 7 et tournant avec la roue 7 pour entraîner une cible grâce à un moyen d'entraînement 8. La vitesse de rotation de la roue 7 est évaluée grâce à un composant sensible. La cible et le composant sensible sont intégrés dans l'essieu 10 à proximité d'une extrémité de l'essieu 10.

Le dispositif de mesure de pression du pneumatique comporte une partie tournante solidaire en rotation de la roue 7 et une partie fixe. La partie tournante comprend un capteur de pression 11 qui est monté sur la jante 6 et qui comporte une cellule sensible mise en communication pneumatique avec l'intérieur du pneumatique de la roue 7. La partie tournante comprend aussi un câble 12 relié au capteur de pression 11, et une antenne tournante. La partie fixe comprend une antenne fixe et une carte électronique. Les mesures de pression sont transmises par la partie tournante à la partie fixe via l'antenne tournante et l'antenne fixe. La partie tournante et la partie fixe sont intégrées dans le capot de roue 5 et dans l'essieu 10.

De nombreux fils électriques sont nécessaires pour alimenter les dispositifs de mesure des ensembles de roue et frein d'un atterrisseur, et pour transmettre les signaux de mesure produits vers l'avionique. Ces fils électriques passent à travers l'essieu 10 qui porte les roues, remontent le long de l'atterrisseur, et cheminent dans le fuselage de l'aéronef Un ensemble connu de ce type est décrit par le document US2005/251306.

Sur certains aéronefs, chaque atterrisseur comporte un ou plusieurs boîtiers de jonction 14 situés au bas de l'atterrisseur ou sur l'atterrisseur. Chaque boîtier de jonction 14 est connecté aux dispositifs de mesure d'un ou de plusieurs ensembles de roue et frein via des fils électriques 15. Le boîtier de jonction 14 est aussi relié au reste de l'aéronef par un ou plusieurs torons de fils 16 qui remonte le long de l'atterrisseur vers le reste de l'aéronef. Le ou les boîtiers de jonction 14 et le ou les torons 16 permettent de mutualiser le transport d'alimentations électriques et de données entre l'aéronef et les dispositifs de mesure.

L'ensemble des équipements qui viennent d'être décrits, c'est-à-dire les dispositifs de mesure et leurs capteurs, mais aussi les fils électriques, les boîtiers de jonction et les boîtiers de compensation, sont à la fois encombrants, lourds et coûteux.

Par ailleurs, à chaque fois que le pneumatique d'une roue est changé, c'est-à-dire généralement tous les 300 vols, les équipements électriques intégrés sur la roue 7, dans le capot de roue 5 et dans l'essieu 10 doivent être déconnectés pour accéder à la roue 7 et pour la démonter de l'essieu 10. Puis, ces équipements électriques sont réintégrés et reconnectés lorsqu'une nouvelle roue 7 avec un nouveau pneumatique est montée sur l'essieu 10. Ces opérations de maintenance sont relativement longues et complexes et présentent des risques de dégradation des équipements électriques, des fils électriques et des connecteurs.

### OBJET DE L'INVENTION

L'invention a pour objet de réduire le coût et la masse d'un système de surveillance d'un ensemble de roue et frein d'aéronef, de faciliter l'intégration et la maintenance, et de limiter les risques de dégradation de ce système de surveillance.

### RESUME DE L'INVENTION

En vue de la réalisation de ce but, on propose un ensemble de roue et frein d'aéronef, comportant :
- une roue ;
- un frein agencé pour freiner la roue et comprenant au moins un organe de friction, un support d'actionneurs, et au moins un actionneur de freinage porté par le support d'actionneurs et agencé pour exercer sélectivement un effort de freinage sur l'organe de friction ;
- un premier dispositif de mesure agencé pour mesurer une vitesse de rotation de la roue ;
- un deuxième dispositif de mesure agencé pour mesurer une température de l'organe de friction ;
- un concentrateur de données agencé pour acquérir des signaux de mesure produits par le premier dispositif de mesure et par le deuxième dispositif de mesure, pour traiter les signaux de mesure de manière à produire des signaux de surveillance numériques, et pour transmettre les signaux de surveillance numériques à l'extérieur de l'ensemble de roue et frein d'aéronef,
le concentrateur de données comprenant un boîtier et au moins une carte électrique intégrée dans le boîtier, le concentrateur de données étant monté sur le support d'actionneurs.

Ainsi, dans l'ensemble de roue et frein selon l'invention, le concentrateur de données est monté sur le support d'actionneurs du frein et acquiert les signaux de mesure produits par le premier dispositif de mesure et par le deuxième dispositif de mesure.

Cette configuration permet de supprimer les nombreux fils électriques qui circulent dans l'essieu, ainsi que le ou les boîtiers de jonction. On réduit donc le coût et la masse du système de surveillance, et on facilite son intégration sur l'atterrisseur. De plus, l'invention permet d'éviter d'avoir à percer l'essieu pour le passage des fils électriques, ce qui permet de simplifier la fabrication de l'atterrisseur et donc de réduire son coût. Par ailleurs, il n'est désormais plus nécessaire de déconnecter les capteurs montés sur la roue ou dans le capot de roue pour retirer la roue de l'essieu. Le retrait de la roue ne nécessite plus de manipulations de connections électriques, ce qui facilite les opérations de maintenance et limite les risques de dégradation de ces équipements.

On propose de plus un ensemble de roue et frein d'aéronef tel que celui qui vient d'être décrit, dans lequel le concentrateur de données est positionné entre deux actionneurs de freinage adjacents portés par le support d'actionneurs.

On propose aussi un ensemble de roue et frein d'aéronef tel que celui qui vient d'être décrit, dans lequel le frein est un frein hydraulique, et dans lequel le boîtier est fixé à des moyens de fixation qui s'étendent sur ou depuis des portions arrières de deux enveloppes adjacentes de logement de piston.

On propose en outre un ensemble de roue et frein d'aéronef tel que celui qui vient d'être décrit, dans lequel le concentrateur de données est positionné dans une zone inférieure du support d'actionneurs.

On propose aussi un ensemble de roue et frein d'aéronef tel que celui qui vient d'être décrit, dans lequel le premier dispositif de mesure comporte une première cible et un premier composant sensible, la première cible ayant une forme générale circulaire, étant solidaire en rotation d'une jante de la roue, et étant positionnée à proximité d'une portion périphérique de la jante de la roue, le premier composant sensible étant porté par le support d'actionneurs.

On propose de plus un ensemble de roue et frein d'aéronef tel que celui qui vient d'être décrit, dans lequel le premier composant sensible est intégré dans ou sur le concentrateur de données.

On propose aussi un ensemble de roue et frein d'aéronef tel que celui qui vient d'être décrit, dans lequel le premier dispositif de mesure comporte une première cible et un premier composant sensible, la première cible ayant une forme générale circulaire et étant montée sur un moyeu de la roue, le premier composant sensible étant monté sur un tube de torsion du frein.

On propose aussi un ensemble de roue et frein d'aéronef tel que celui qui vient d'être décrit, dans lequel le premier composant sensible est monté sur un voile annulaire transversal du tube de torsion.

On propose de plus un ensemble de roue et frein d'aéronef tel que celui qui vient d'être décrit, dans lequel le moyeu comporte des reliefs et forme lui-même la première cible.

On propose en outre un ensemble de roue et frein d'aéronef tel que celui qui vient d'être décrit, dans lequel le deuxième dispositif de mesure comprend une sonde thermocouple, et dans lequel une compensation en température est réalisée dans le concentrateur de données.

On propose aussi un ensemble de roue et frein d'aéronef tel que celui qui vient d'être décrit, comprenant en outre un troisième dispositif de mesure agencé pour mesurer une usure de l'organe de friction.

On propose de plus un ensemble de roue et frein d'aéronef tel que celui qui vient d'être décrit, dans lequel le troisième dispositif de mesure comporte une deuxième cible et un deuxième composant sensible, la deuxième cible étant reliée à l'organe de friction, le deuxième composant sensible étant porté par le support d'actionneurs.

On propose aussi un ensemble de roue et frein d'aéronef tel que celui qui vient d'être décrit, dans lequel le deuxième composant sensible est intégré dans ou sur le boîtier du concentrateur de données.

On propose aussi un ensemble de roue et frein d'aéronef tel que celui qui vient d'être décrit, dans lequel le concentrateur de données comprend une antenne pour transmettre via une transmission sans fil les signaux de surveillance numériques.

On propose de plus un atterrisseur d'aéronef comprenant un ensemble de roue et frein d'aéronef tel que celui qui vient d'être décrit.

L'invention sera mieux comprise à la lumière de la description qui suit de modes de mise en œuvre particuliers non limitatifs de l'invention.

### BREVE DESCRIPTION DES DESSINS

Il sera fait référence aux dessins annexés, parmi lesquels :
- la figure 1 représente une vue en coupe, selon un plan passant par un axe de rotation d'une roue d'aéronef, d'un ensemble de roue et frein d'aéronef de l'art antérieur ;
- la figure 2 représente une vue en coupe, selon un plan passant par un axe de rotation d'une roue d'aéronef, d'un ensemble de roue et frein d'aéronef selon un premier mode de réalisation de l'invention ;
- la figure 3 représente une vue d'une face arrière de l'ensemble de roue et frein d'aéronef selon le premier mode de réalisation de l'invention ;
- la figure 4 représente le support d'actionneurs et le concentrateur de données dans une première position ;
- la figure 5 représente le support d'actionneurs et le concentrateur de données dans une deuxième position ;
- la figure 6 représente le support d'actionneurs et le concentrateur de données dans une troisième position ;
- la figure 7 représente le support d'actionneurs et le concentrateur de données dans une quatrième position ;
- la figure 8 représente le support d'actionneurs et le concentrateur de données dans la première position, ainsi que les moyens de fixation du concentrateur de données au support d'actionneurs ;
- la figure 9 est une vue similaire à celle de la figure 3, pour un ensemble de roue et frein d'aéronef selon un deuxième mode de réalisation de l'invention ;
- la figure 10 est une vue similaire à celle de la figure 2, pour un ensemble de roue et frein d'aéronef selon un troisième mode de réalisation de l'invention.

### DESCRIPTION DETAILLEE DE L'INVENTION

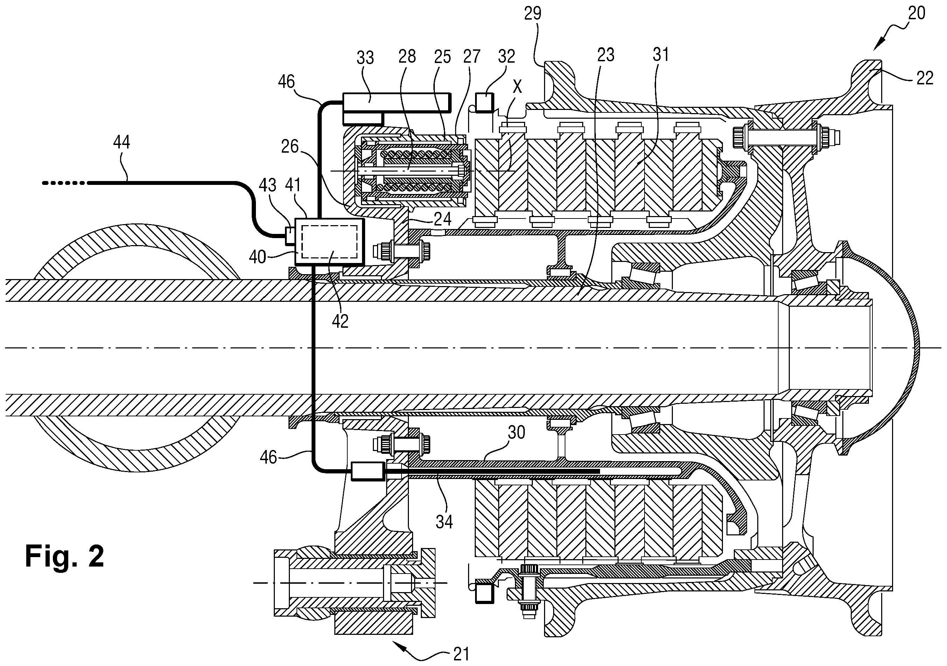

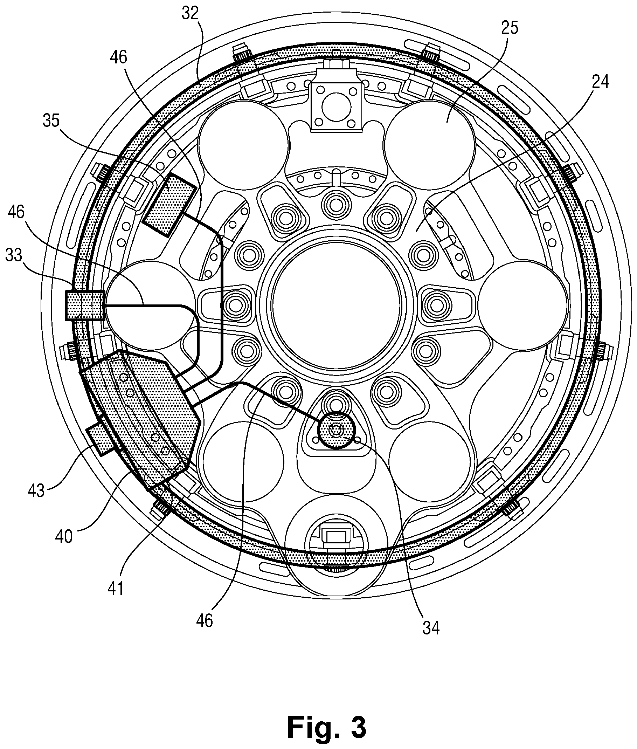

En référence aux figures 2 et 3, on décrit un ensemble de roue et frein d'aéronef selon un premier mode de réalisation de l'invention alors que celui-ci est assemblé.

L'ensemble de roue et frein d'aéronef comporte tout d'abord une roue 20 d'un atterrisseur d'un aéronef et un frein 21 destiné à freiner la roue 20.

La roue 20 comporte une jante 22 qui reçoit un pneumatique et qui est montée à rotation sur un essieu 23 situé au bas de l'atterrisseur.

Le frein 21 est ici un frein hydraulique. Le frein 21 comprend un support d'actionneurs, en l'occurrence une couronne de freinage 24, qui porte au moins un actionneur de freinage, en l'occurrence une pluralité d'actionneurs de freinage 25. La couronne de freinage 24 est montée sur l'essieu 23.

La couronne de freinage 24 comprend une pluralité d'enveloppes 26 de forme extérieure générale cylindrique. Chaque enveloppe 26 définit une cavité qui débouche du côté de la roue 20 et qui forme un logement de piston.

Chaque actionneur de freinage 25 comprend une chemise cylindrique 27 dans laquelle est monté un piston 28 agencé pour coulisser selon un axe X. La chemise 27 est reçue à étanchéité dans le logement de piston.

Un tube de torsion 30 est fixé à la couronne de freinage 24. Le tube de torsion 30 s'étend dans la jante 22. La couronne de freinage 24, et donc le tube de torsion 30 sont arrêtés en rotation vis-à-vis de l'essieu 23 par des moyens d'arrêt non représentés ici.

Le frein 21 comprend aussi au moins un organe de friction, en l'occurrence une pile de disques de carbone 31 composée de rotors qui sont solidaires en rotation de la jante 22 et de stators qui sont solidaires en rotation du tube de torsion 30.

Les actionneurs de freinage 25 sont agencés pour exercer sélectivement, lors de l'admission de fluide sous pression, un effort de freinage sur les disques de carbone 31.

L'ensemble de roue et frein d'aéronef comporte aussi un premier dispositif de mesure agencé pour mesurer une vitesse de rotation de la roue 20.

Le premier dispositif de mesure comporte une première cible 32 et un premier composant sensible 33.

La première cible 32 présente une forme générale circulaire et est ici une roue dentée métallique. La première cible 32 comprend une alternance de dents (ou bâtons) et de creux. Les dents sont soit des dents radiales, c'est-à-dire qu'elles s'étendent au niveau d'une périphérie de la première cible 32 selon des directions radiales, soit des dents axiales, c'est à dire qu'elles s'étendent au niveau d'une périphérie de la première cible 32 selon des directions axiales.

La première cible 32 est solidaire en rotation de la jante 22 de la roue 20. La première cible 32 est positionnée à proximité d'une portion périphérique de la jante 22 qui est proche du rebord de jante 29, du côté du frein 21. La première cible 32 est soit montée directement sur la jante 22, soit via une pièce intermédiaire quelconque elle-même fixée directement sur la jante 22, par exemple un écran thermique ou une pièce dédiée à la fixation de la première cible 32.

Le premier composant sensible 33 est ici un capteur magnétique, en l'occurrence un capteur à effet Hall 33. Le capteur à effet Hall 33 produit un premier signal de mesure, en l'occurrence un signal de mesure analogique dont l'amplitude dépend de la présence d'une dent ou d'un creux en face du capteur à effet Hall 33. Le premier signal de mesure a une fréquence qui est proportionnelle à la vitesse de rotation de la cible 32 et donc à la vitesse de rotation de la roue 20.

Le premier dispositif de mesure a principalement pour but de détecter un blocage de la roue 20 ou un début de blocage. Dans ce cas, un calculateur de freinage du système de freinage modulera la commande de freinage envoyée au frein 21 (fonction *antiskid*)*.*

On note que le premier composant sensible 33 pourrait être redondé pour améliorer la disponibilité de la fonction *antiskid.*

L'ensemble de roue et frein d'aéronef comporte aussi un deuxième dispositif de mesure agencé pour mesurer une température régnant à l'intérieur de la pile de disques de carbone 31.

Le deuxième dispositif de mesure comprend une sonde thermocouple 34 de type K positionnée dans une cavité du tube de torsion 30 du frein 21.

L'ensemble de roue et frein comprend aussi un troisième dispositif de mesure agencé pour mesurer une usure des disques de carbone 31.

Le troisième dispositif de mesure comporte une deuxième cible et un deuxième composant sensible 35. La deuxième cible est une tige, ici métallique, qui est reliée à la pile de disques de carbone 31. Le deuxième composant sensible 35 est un capteur à induction magnétique, en l'occurrence un LVDT 35 (pour *Linear Variable Differential Transformer*). Le LVDT 35 mesure le déplacement de la tige au fur et à mesure que les disques de carbone 31 s'usent sous l'effet de la friction lors des freinages de l'aéronef.

L'ensemble de roue et frein comporte aussi un concentrateur de données 40. Le concentrateur de données 40 comprend un boîtier 41 et au moins une carte électrique 42 intégrée dans le boîtier 41.

Le concentrateur de données 40 est monté sur la couronne de freinage 24.

Le concentrateur de données 40 est connecté par des fils électriques 46 au capteur à effet Hall 33 du premier dispositif de mesure, à la sonde thermocouple 34 du deuxième dispositif de mesure, et au LVDT 35 du troisième dispositif de mesure. On note que les fils électriques 46 qui relient le concentrateur de données 40 à la sonde thermocouple 34 sont des fils de chromel et d'« Alumel » (marque déposée).

Le concentrateur de données 40 comprend un unique connecteur électrique 43. Le concentrateur de données 40 est relié à un câble 44 via le connecteur électrique 43. Le câble 44 intègre des fils électriques sur lesquels cheminent une alimentation électrique qui permet d'alimenter le concentrateur de données 40 lui-même ainsi que les premier, deuxième et troisième dispositifs de mesure. Le câble 44 intègre aussi des fils électriques sur lesquels est mis en œuvre un bus de communication.

L'utilisation d'un unique connecteur 43 permet de simplifier les opérations de maintenance du frein. En effet lorsqu'il faut remplacer un frein suite à l'usure complète de ses organes de friction, il n'est pas nécessaire de déconnecter un connecteur pour chaque dispositif de mesure, il suffit de déconnecter cet unique connecteur.

Le concentrateur de données 40 acquiert des signaux de mesure produits par le premier dispositif de mesure, le deuxième dispositif de mesure et le troisième dispositif de mesure.

Le concentrateur de données 40 met en œuvre des traitements divers sur les signaux de mesure, et produit à partir des signaux de mesure des signaux de surveillance numériques.

Ces traitements peuvent comprendre une numérisation des signaux de mesure, auquel cas la carte électrique 42 du concentrateur de données 40 comprend un ou plusieurs convertisseurs analogiques numériques. Cette conversion n'est pas obligatoire, car les signaux de mesure produits par les capteurs pourraient être déjà des signaux numériques.

Ces traitements peuvent aussi comprendre une mise en forme préalable à la transmission.

Ces traitements peuvent aussi comprendre une analyse des signaux de mesure dans le but de réaliser, au sein même du concentrateur de données 40, une surveillance de l'ensemble de roue et frein. Dans ce cas, les signaux de surveillance numériques peuvent comprendre des messages d'alerte.

On comprend donc que les traitements réalisés par le concentrateur de données 40 peuvent être soit relativement simples (et consister, par exemple, en une simple numérisation des signaux de mesure ou bien, si les signaux de mesure sont déjà numériques, en une simple transmission desdits signaux numériques), soit relativement complexes.

Le concentrateur de données 40 transmet les signaux de surveillance numériques, via le bus numérique du câble 44 (et donc via le connecteur 43), à l'extérieur de l'ensemble de roue et frein, en l'occurrence vers les systèmes avioniques de l'aéronef. Les informations sont ensuite disponibles pour le calculateur de freinage assurant la fonction *antiskid,* pour le personnel de maintenance, et peuvent aussi être affichées dans le cockpit pour les pilotes, notamment la température et l'usure des freins.

On note que le concentrateur de données 40 peut parfaitement transmettre les signaux de surveillance numériques à l'extérieur du concentrateur de données 40 via une communication sans fil.

Le connecteur 43 est dans ce cas uniquement utilisé pour alimenter électriquement le concentrateur de données 40, ou peut être supprimé grâce à l'utilisation d'une batterie dans le concentrateur de données 40.

Le concentrateur de données 40 intègre alors un émetteur sans fil qui transmet les signaux de surveillance numériques à un récepteur installé dans la soute de l'atterrisseur ou à un autre endroit de l'aéronef. Le concentrateur de données 40 peut aussi intégrer un récepteur sans fil pour que le concentrateur de données 40 puisse recevoir des données.

La communication sans fil est par exemple une communication radioélectrique, auquel cas l'émetteur sans fil et le récepteur sans fil comprennent une antenne, ou bien une communication optique, auquel cas l'émetteur sans fil comprend une source lumineuse (par exemple une diode électroluminescente) et le récepteur sans fil comprend un photorécepteur (par exemple une photodiode).

Avantageusement, la compensation en température des signaux de mesure produits par la sonde thermocouple 34 du deuxième dispositif de mesure est réalisée dans le concentrateur de données 40.

Ainsi, la jonction entre les fils de cuivre et les fils de chromel et d'« Alumel » (marque déposée) est réalisée dans le concentrateur de données 40. La température des soudures froides est mesurée dans le concentrateur de données 40. La température est mesurée par un capteur de température, par exemple par une sonde RTD (pour *Resistor Température Detector*) ou par une thermistance.

Ici, par « compensation en température », on entend donc la jonction des fils et la mesure de la température des soudures froides.

La détermination de la température « compensée » de la pile de disques 31 peut elle aussi être réalisée dans le concentrateur de données 40. Dans ce cas, le concentrateur de données 40 comprend un composant de traitement, monté par exemple sur la carte électrique 42, qui acquiert la tension mesurée aux bornes de la sonde thermocouple 34, transforme la température des soudures froides en une tension de référence, calcule une tension mesurée compensée à partir de la tension mesurée et de la tension de référence, et en déduit la température de la pile de disques 31. Le composant de traitement est par exemple un microcontrôleur.

Cette solution est très avantageuse, car la longueur des fils de chromel et d'« Alumel » (marque déposée) est très courte entre la sonde thermocouple 34 et le concentrateur de données 40 qui est positionné sur la couronne de freinage 24 du frein 21. On réduit donc la longueur de fil sur le frein 21 pour la mesure de température, ce qui permet d'améliorer la précision de la mesure et de diminuer le coût du deuxième dispositif de mesure.

On décrit maintenant la manière dont est positionné et fixé sur la couronne de freinage 24 le concentrateur de données 40.

Le concentrateur de données 40 est positionné entre deux actionneurs de freinage 25 adjacents. Le connecteur 43 s'étend vers l'extérieur de la couronne de freinage 24 selon une direction radiale, pour être facilement accessible. Il pourrait aussi s'étendre vers l'extérieur du frein 21 selon une direction parallèle à l'axe de rotation de la roue 20.

Plusieurs localisations sont possibles pour installer le concentrateur de données 40 sur la couronne de freinage 24.

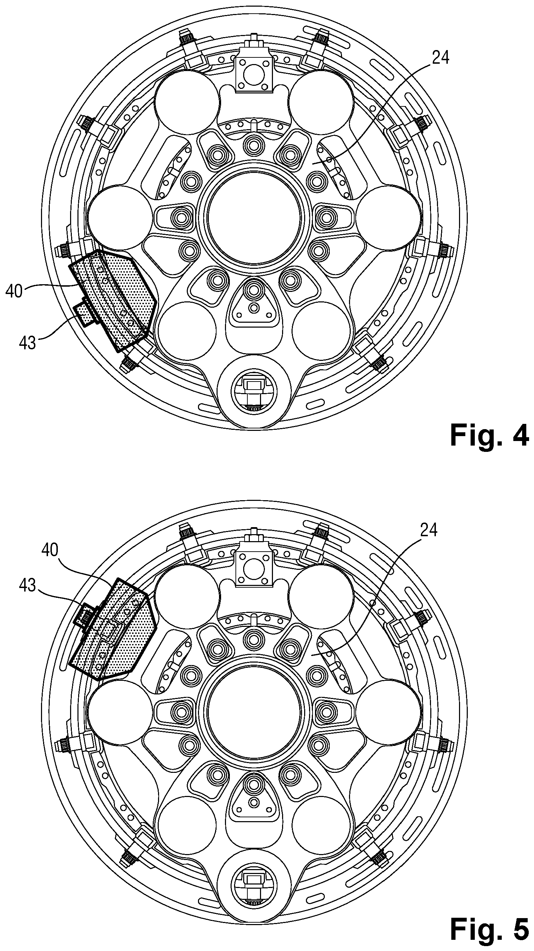

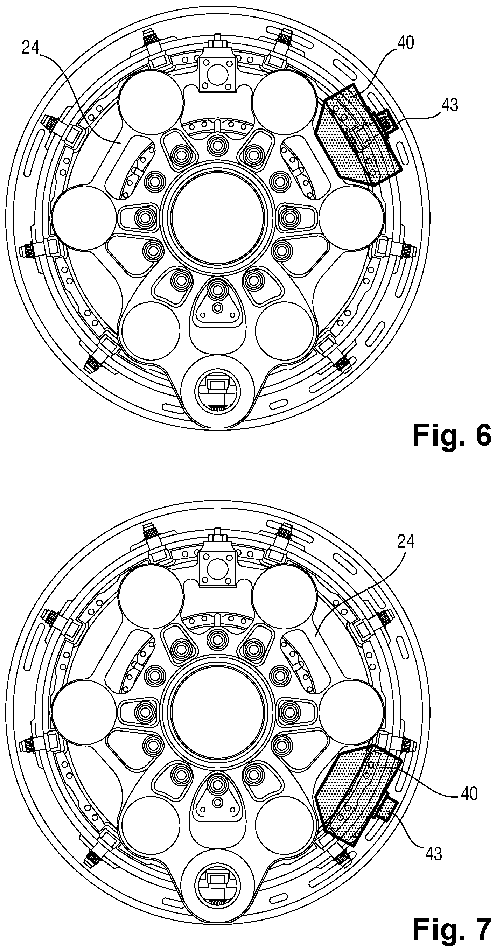

Sur la figure 4, le concentrateur de données 40 est situé dans une zone inférieure gauche de la couronne de freinage 24. Sur la figure 5, le concentrateur de données 40 est situé dans une zone supérieure gauche de la couronne de freinage 24. Sur la figure 6, le concentrateur de données 40 est situé dans une zone supérieure droite de la couronne de freinage 24. Sur la figure 7, le concentrateur de données 40 est situé dans une zone inférieure droite de la couronne de freinage 24.

Pour définir la position du concentrateur de données 40, on cherche en particulier à protéger le concentrateur de données 40 des impacts de gravillons lorsque l'aéronef atterrit à grande vitesse ou bien au cours de la phase de décollage.

Le meilleur emplacement du concentrateur de données 40 peut varier d'un aéronef à l'autre.

L'emplacement choisi peut dépendre de la position côté gauche ou côté droit du frein 21 sur l'atterrisseur (et donc de la position côté gauche ou côté droit de la roue 20). En effet, la partie du frein 21 la plus exposée aux gravillons est la partie située vers l'avant, qui n'est pas la même selon que le frein 21 est installé côté gauche ou côté droit. Le frein 21 peut être équipé de deux zones de fixation du concentrateur de données 40 (correspondant par exemple aux figures 4 et 7). Le concentrateur de données 40 est alors installé comme sur la figure 4 si le frein est monté côté gauche sur l'atterrisseur, ou comme sur la figure 7 si le frein est monté côté droit sur l'atterrisseur, de façon à ne pas être situé vers l'avant de l'atterrisseur.

Il est avantageux de positionner le concentrateur de données 40 dans une zone inférieure de la couronne de freinage 24 (comme sur les figures 4 et 7) pour que les composants internes du concentrateur de données 40 soient moins exposés à la chaleur émise par les disques de carbone 31 du frein 21 après un freinage à haute énergie.

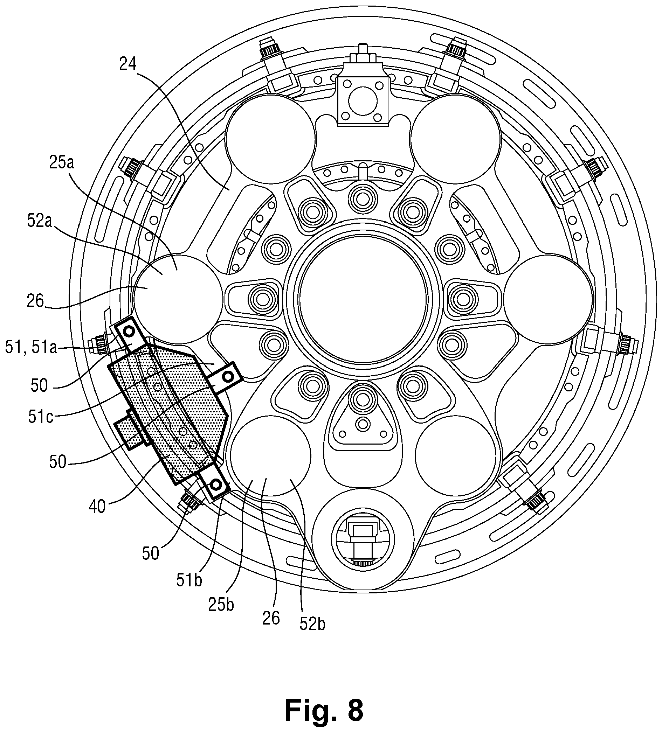

En référence à la figure 8, le concentrateur de données 40 est fixé sur la couronne de freinage 24, entre l'actionneur de freinage 25a et l'actionneur de freinage 25b qui sont des actionneurs de freinage 25 adjacents, de la manière suivante.

Le boîtier 41 du concentrateur de données 40 comporte une pluralité de premiers moyens de fixation 50, en l'occurrence trois premiers moyens de fixation 50, qui sont localisés à intervalles angulaires réguliers autour du centre de gravité du concentrateur de données 40. Cette disposition permet au concentrateur de données 40 et aux fixations de supporter sans dommage les niveaux vibratoires générés par le frein 21 lors des freinages, et les chocs subis lors des atterrissages.

Chaque premier moyen de fixation 50 est ici une patte de fixation.

Les premiers moyens de fixation 50 du boîtier 40 coopèrent avec trois deuxièmes moyens de fixation 51 de la couronne de freinage 24. Les trois deuxièmes moyens de fixation 51 comprennent un deuxième moyen de fixation 51a qui s'étend depuis ou sur une portion arrière 52a de l'enveloppe 26 du logement de piston de l'actionneur de freinage 25a, un deuxième moyen de fixation 51b qui s'étend depuis ou sur une portion arrière 52b de l'enveloppe 26 du logement de piston de l'actionneur de freinage 25b, et un deuxième moyen de fixation 51c positionné sur la couronne de freinage 24 entre les deux actionneurs de freinage 25a, 25b. Par « portion arrière de l'enveloppe du logement de piston », on entend la partie qui s'étend non pas du côté de la roue 20 (où débouche la cavité qui forme le logement de piston) mais de l'autre côté.

Chaque deuxième moyen de fixation 51 est ici un bossage.

Les premiers moyens de fixation 50 sont fixés aux deuxièmes moyens de fixation 51 par des boulons.

Ainsi, le boîtier 41 est fixé sur la couronne de freinage 24 via trois points de fixation comprenant deux points de fixation situés sur la périphérie de la couronne de freinage 24, et un point de fixation situé entre les deux précédents points de fixation mais rapproché du centre de la couronne de freinage 24. Cette configuration permet une fixation particulièrement robuste.

De plus, comme le concentrateur de données 40 ne dépasse pas ou très peu de l'épaisseur de la couronne de freinage 24 puisqu'il est situé entre les enveloppes 26 des logements de piston, sa présence sur la couronne de freinage 24 ne constitue pas de gêne particulière pour les opérations de maintenance.

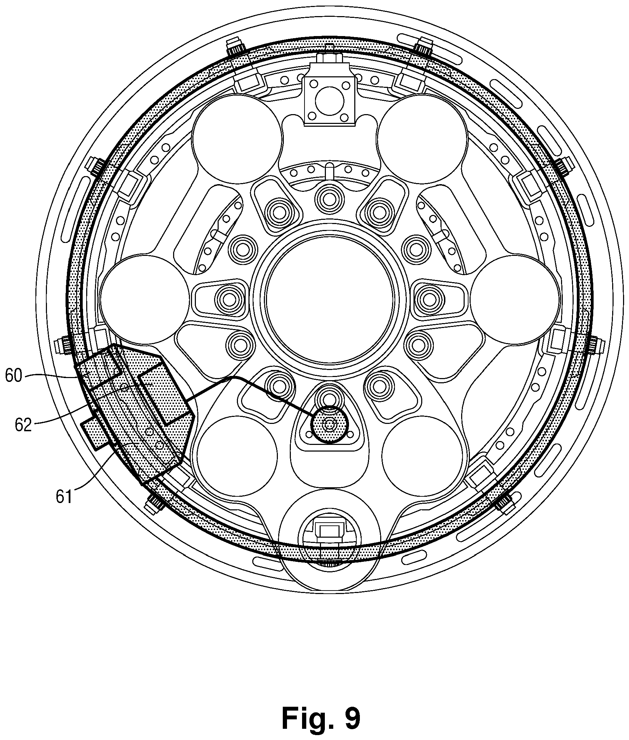

En référence à la figure 9, dans un ensemble de roue et frein selon un deuxième mode de réalisation, le premier composant sensible 60 du premier dispositif de mesure, c'est-à-dire ici le capteur à effet Hall 60 qui produit un signal de mesure représentatif de la vitesse de rotation de la roue, est intégré dans ou sur le concentrateur de données 61. De même, le deuxième composant sensible 62 du troisième dispositif de mesure, c'est-à-dire ici le LVDT qui produit un signal de mesure représentatif de l'usure de la pile de disques, est intégré dans ou sur le concentrateur de données 61.

Le concentrateur de données 61 devient un organe monobloc qui inclut le capteur de vitesse de la roue, le capteur d'usure du frein et le conditionnement du capteur de température du frein. Cette solution est plus compacte et réduit le nombre de fils électriques sur le frein.

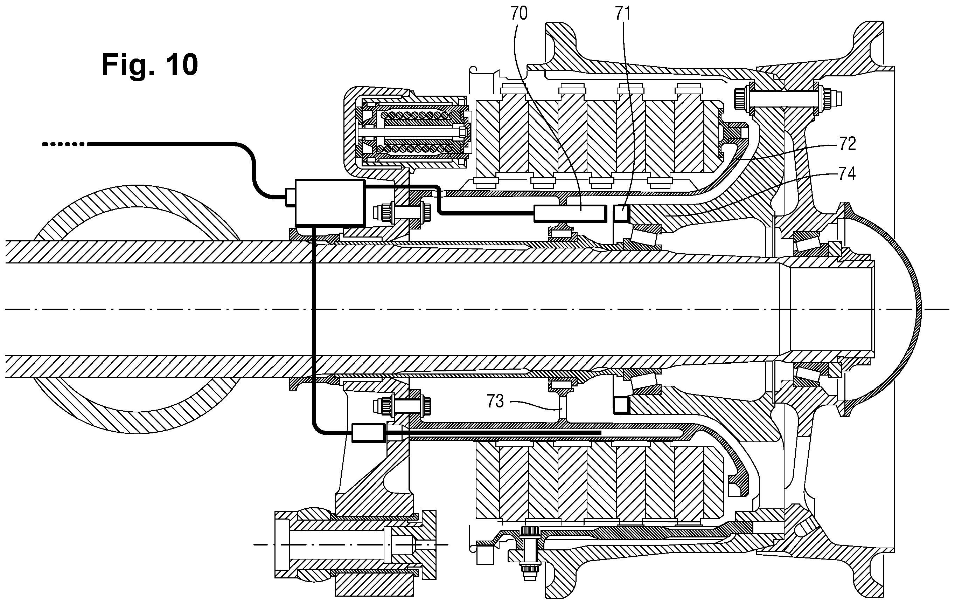

En référence à la figure 10, dans un ensemble de roue et frein selon un troisième mode de réalisation, le premier composant sensible 70 et la première cible 71 du premier dispositif de mesure sont installés à des endroits différents.

Le premier composant sensible 70, qui est à nouveau un capteur à effet Hall 70, est installé sur le tube de torsion 72 du frein et, plus particulièrement, à l'intérieur du tube de torsion 72, sur un voile annulaire transversal 73 du tube de torsion 72.

La première cible 71 est quant à elle à nouveau une roue dentée et est montée sur le moyeu 74 de la roue. Alternativement, le moyeu 74 pourrait être fabriqué de manière à présenter des reliefs, par exemple une alternance de dents et de creux, de sorte que le moyeu 74 forme la première cible 71.

Le troisième mode de réalisation permet de mieux contrôler le jeu entre le premier composant sensible 70 et la première cible 71 et les positions relatives du premier composant sensible 70 et de la première cible 71. La masse du premier dispositif de mesure est réduite. Par contre, le premier dispositif de mesure est soumis à une température plus élevée du fait de la proximité avec les disques de carbone du frein.

Bien entendu, l'invention n'est pas limitée aux modes de réalisation décrits mais englobe toute variante entrant dans le champ de l'invention telle que définie par les revendications.

Dans le premier dispositif de mesure, le premier composant sensible et la première cible peuvent être différents de ceux présentés ici.

On a décrit ici que le composant sensible est un capteur à effet Hall, et que la cible est une roue dentée. Cette configuration ne limite en aucun cas la portée de l'invention.

Quelle que soit la technologie utilisée, le composant sensible peut par exemple être un capteur de distance ou un détecteur.

Le détecteur fournit un signal de mesure de type « tout ou rien » selon que la distance entre le détecteur et la cible est supérieure ou non à un seuil prédéfini.

Le capteur de distance fournit un signal de mesure qui dépend de la distance entre le capteur et la cible, comme c'est le cas pour un capteur de proximité par exemple.

La technologie de mesure peut par exemple être une technologie inductive, une technologie magnétique, une technologie à ultrasons ou une technologie optique. La technologie à ultrasons et la technologie optique permettent de réaliser la mesure sur des matériaux non métalliques, ce qui rend possible l'utilisation de cibles en matériaux composites plus légers.

De même, dans le deuxième dispositif de mesure et le troisième dispositif de mesure, les capteurs, les cibles et les technologies utilisés peuvent être différents.

Le boîtier du concentrateur de données pourrait être fixé de manière différente sur la couronne de freinage.

Bien sûr, l'invention s'applique aussi à un frein électrique : le support d'actionneurs est alors un porte-actionneurs qui porte un ou plusieurs actionneurs de freinage électromécaniques.

Le concentrateur de données pourrait être relié à d'autres dispositifs de mesure, par exemple à un dispositif de mesure de la pression du pneumatique de la roue, à un dispositif de mesure de la pression régnant dans un amortisseur de l'atterrisseur, etc.

Le concentrateur de données pourrait aussi être interrogé depuis le sol par un opérateur, grâce par exemple à une antenne intégrée dans le concentrateur de données.

## Revendications

1. Ensemble de roue et frein d'aéronef, comportant :
- une roue (20) ;
- un frein (21) agencé pour freiner la roue et comprenant au moins un organe de friction (31), un support d'actionneurs (24), et au moins un actionneur de freinage (25) porté par le support d'actionneurs et agencé pour exercer sélectivement un effort de freinage sur l'organe de friction ;
- un premier dispositif de mesure agencé pour mesurer une vitesse de rotation de la roue (20) ;
- un deuxième dispositif de mesure agencé pour mesurer une température de l'organe de friction (31) ;
- un concentrateur de données (40 ; 61) agencé pour acquérir des signaux de mesure produits par le premier dispositif de mesure et par le deuxième dispositif de mesure, pour traiter les signaux de mesure de manière à produire des signaux de surveillance numériques, et pour transmettre les signaux de surveillance numériques à l'extérieur de l'ensemble de roue et frein d'aéronef,
**caractérisé en ce que** le concentrateur de données (40 ; 61) comprend un boîtier (41) et au moins une carte électrique (42) intégrée dans le boîtier (41), le concentrateur de données (40 ; 61) étant monté sur le support d'actionneurs (24).

2. Ensemble de roue et frein d'aéronef selon la revendication 1, dans lequel le concentrateur de données (40) est positionné entre deux actionneurs de freinage (25) adjacents portés par le support d'actionneurs.

3. Ensemble de roue et frein d'aéronef selon la revendication 2, dans lequel le frein (21) est un frein hydraulique, et dans lequel le boîtier (41) est fixé à des moyens de fixation (51) qui s'étendent sur ou depuis des portions arrières de deux enveloppes (26) adjacentes de logement de piston.

4. Ensemble de roue et frein d'aéronef selon l'une des revendications précédentes, dans lequel le concentrateur de données (40) est positionné dans une zone inférieure du support d'actionneurs (24).

5. Ensemble de roue et frein d'aéronef selon l'une des revendications précédentes, dans lequel le premier dispositif de mesure comporte une première cible (32) et un premier composant sensible (33 ; 60), la première cible ayant une forme générale circulaire, étant solidaire en rotation d'une jante (22) de la roue (20), et étant positionnée à proximité d'une portion périphérique de la jante (22) de la roue (20), le premier composant sensible (33) étant porté par le support d'actionneurs (24).

6. Ensemble de roue et frein d'aéronef selon la revendication 5, dans lequel le premier composant sensible (60) est intégré dans ou sur le concentrateur de données (61) .

7. Ensemble de roue et frein d'aéronef selon l'une des revendications 1 à 4, dans lequel le premier dispositif de mesure comporte une première cible (71) et un premier composant sensible (70), la première cible (71) ayant une forme générale circulaire et étant montée sur un moyeu (74) de la roue, le premier composant sensible (70) étant monté sur un tube de torsion (72) du frein.

8. Ensemble de roue et frein d'aéronef selon la revendication 7, dans lequel le premier composant sensible (70) est monté sur un voile annulaire transversal (73) du tube de torsion (72).

9. Ensemble de roue et frein d'aéronef selon la revendication 7, dans lequel le moyeu (74) comporte des reliefs et forme lui-même la première cible.

10. Ensemble de roue et frein d'aéronef selon l'une des revendications précédentes, dans lequel le deuxième dispositif de mesure comprend une sonde thermocouple (34), et dans lequel une compensation en température est réalisée dans le concentrateur de données (40).

11. Ensemble de roue et frein d'aéronef selon l'une des revendications précédentes, comprenant en outre un troisième dispositif de mesure agencé pour mesurer une usure de l'organe de friction (31).

12. Ensemble de roue et frein d'aéronef selon la revendication 11, dans lequel le troisième dispositif de mesure comporte une deuxième cible et un deuxième composant sensible (35 ; 62), la deuxième cible étant reliée à l'organe de friction, le deuxième composant sensible étant porté par le support d'actionneurs (24).

13. Ensemble de roue et frein selon la revendication 12, dans lequel le deuxième composant sensible (61) est intégré dans ou sur le boîtier du concentrateur de données (40) .

14. Ensemble de roue et frein d'aéronef selon l'une des revendications précédentes, dans lequel le concentrateur de données (40) comprend une antenne pour transmettre via une transmission sans fil les signaux de surveillance numériques.

15. Atterrisseur d'aéronef comprenant un ensemble de roue et frein d'aéronef selon l'une des revendications précédentes.

## Patentansprüche

1. Anordnung aus Rad und Bremse für ein Luftfahrzeug, umfassend:
- ein Rad (20);
- eine Bremse (21), die ausgebildet ist, um das Rad zu bremsen, und mindestens ein Reiborgan (31), einen Aktorträger (24) und mindestens einen Bremsaktor (25) umfasst, der von dem Aktorträger getragen wird und ausgebildet ist, um selektiv eine Bremskraft auf das Reiborgan auszuüben;
- eine erste Messvorrichtung, die ausgebildet ist, um eine Drehgeschwindigkeit des Rades (20) zu messen;
- eine zweite Messvorrichtung, die ausgebildet ist, um eine Temperatur des Reiborgans (31) zu messen;
- einen Datenkonzentrator (40; 61), der ausgebildet ist, um Messsignale zu erfassen, die von der ersten Messvorrichtung und von der zweiten Messvorrichtung erzeugt werden, um die Messsignale derart zu verarbeiten, dass digitale Überwachungssignale erzeugt werden, und um die digitalen Überwachungssignale nach außerhalb der Anordnung aus Rad und Bremse für ein Luftfahrzeug zu übertragen,
**dadurch gekennzeichnet, dass** der Datenkonzentrator (40; 61) ein Gehäuse (41) und mindestens eine in das Gehäuse (41) integrierte elektrische Karte (42) umfasst, wobei der Datenkonzentrator (40; 61) auf dem Aktorträger (24) angebracht ist.

2. Anordnung aus Rad und Bremse für ein Luftfahrzeug nach Anspruch 1, bei der der Datenkonzentrator (40) zwischen zwei angrenzenden Bremsaktoren (25) positioniert ist, die von dem Aktorträger getragen werden.

3. Anordnung aus Rad und Bremse für ein Luftfahrzeug nach Anspruch 2, bei der die Bremse (21) eine hydraulische Bremse ist, und bei der das Gehäuse (41) an Befestigungsmitteln (51) befestigt ist, die sich auf oder ab den hinteren Abschnitten zweier benachbarter Kolbengehäusemänteln (26) erstrecken.

4. Anordnung aus Rad und Bremse für ein Luftfahrzeug nach einem der vorhergehenden Ansprüche, bei der der Datenkonzentrator (40) in einer unteren Zone des Aktorträgers (24) positioniert ist.

5. Anordnung aus Rad und Bremse für ein Luftfahrzeug nach einem der vorhergehenden Ansprüche, bei der die erste Messvorrichtung ein erstes Ziel (32) und eine erste empfindliche Komponente (33; 60) umfasst, wobei das erste Ziel eine allgemeine kreisförmige Form hat, drehfest mit einer Felge (22) des Rades (20) verbunden und in der Nähe eines Umfangsabschnittes der Felge (22) des Rades (20) positioniert ist, wobei die erste empfindliche Komponente (33) von dem Aktorträger (24) getragen wird.

6. Anordnung aus Rad und Bremse für ein Luftfahrzeug nach Anspruch 5, bei der die erste empfindliche Komponente (60) in den oder auf dem Datenkonzentrator (61) integriert ist.

7. Anordnung aus Rad und Bremse für ein Luftfahrzeug nach einem der Ansprüche 1 bis 4, bei der die erste Messvorrichtung ein erstes Ziel (71) und eine erste empfindliche Komponente (70) umfasst, wobei das erste Ziel (71) eine allgemeine kreisförmige Form hat und an einer Nabe (74) des Rades anbracht ist, wobei die erste empfindliche Komponente (70) auf einem Torsionsrohr (72) der Bremse angebracht ist.

8. Anordnung aus Rad und Bremse für ein Luftfahrzeug nach Anspruch 7, bei der die erste empfindliche Komponente (70) auf einer transversalen ringförmigen Scheibe (73) des Torsionsrohrs (72) angebracht ist.

9. Anordnung aus Rad und Bremse für ein Luftfahrzeug nach Anspruch 7, bei der die Nabe (74) Reliefelemente umfasst und selbst das erste Ziel bildet.

10. Anordnung aus Rad und Bremse für ein Luftfahrzeug nach einem der vorhergehenden Ansprüche, bei der die zweite Messvorrichtung eine Thermoelementsonde (34) umfasst und bei der ein Temperaturausgleich in dem Datenkonzentrator (40) erfolgt.

11. Anordnung aus Rad und Bremse für ein Luftfahrzeug nach einem der vorhergehenden Ansprüche, ferner umfassend eine dritte Messvorrichtung, die ausgebildet ist, um eine Abnutzung des Reiborgans (31) zu messen.

12. Anordnung aus Rad und Bremse für ein Luftfahrzeug nach Anspruch 11, bei der die dritte Messvorrichtung ein zweites Ziel und eine zweite empfindliche Komponente (35; 62) umfasst, wobei das zweite Ziel mit dem Reiborgan verbunden ist, wobei die zweite empfindliche Komponente von dem Aktorträger (24) getragen wird.

13. Anordnung aus Rad und Bremse nach Anspruch 12, bei der die zweite empfindliche Komponente (61) in das oder auf dem Gehäuse des Datenkonzentrators (40) integriert ist.

14. Anordnung aus Rad und Bremse eines Luftfahrzeugs nach einem der vorhergehenden Ansprüche, bei der der Datenkonzentrator (40) eine Antenne umfasst, um die digitalen Überwachungssignale über eine drahtlose Übertragung zu übertragen.

15. Luftfahrzeugfahrwerk, umfassend eine Anordnung aus Rad und Bremse für ein Luftfahrzeug nach einem der vorhergehenden Ansprüche.

## Claims

1. Aircraft wheel and brake assembly, comprising:
- a wheel (20);
- a brake (21) arranged to brake the wheel and comprising at least one friction member (31), an actuator bracket (24), and at least one brake actuator (25) held by the actuator bracket and arranged to selectively exert a braking force on the friction member;
- a first measuring device arranged to measure a rotation speed of the wheel (20);
- a second measuring device arranged to measure a temperature of the friction member (31);
- a data concentrator (40; 61) arranged to acquire measurement signals produced by the first measuring device and by the second measuring device, to process the measurement signals so as to produce digital monitoring signals, and to transmit the digital monitoring signals to the outside of the aircraft wheel and brake assembly,
**characterized in that** the data concentrator (40; 61) comprises a housing (41) and at least one printed circuit board (42) incorporated into the housing (41), the data concentrator (40; 61) being mounted on the actuator bracket (24).

2. Aircraft wheel and brake assembly according to Claim 1, in which the data concentrator (40) is positioned between two adjacent brake actuators (25) held by the actuator bracket.

3. Aircraft wheel and brake assembly according to Claim 2, in which the brake (21) is a hydraulic brake, and in which the housing (41) is fastened to fastening means (51) that extend on or from rear portions of two adjacent piston housing casings (26).

4. Aircraft wheel and brake assembly according to one of the previous claims, in which the data concentrator (40) is positioned in a lower zone of the actuator bracket (24).

5. Aircraft wheel and brake assembly according to one of the previous claims, in which the first measuring device includes a first target (32) and a first sensing component (33; 60), the first target having a generally circular shape, being rigidly connected to a rim (22) of the wheel (20) for rotation therewith, and being positioned close to a peripheral portion of the rim (22) of the wheel (20), the first sensing component (33) being held by the actuator bracket (24) .

6. Aircraft wheel and brake assembly according to Claim 5, in which the first sensing component (60) is incorporated into or on the data concentrator (61).

7. Aircraft wheel and brake assembly according to one of Claims 1 to 4, in which the first measuring device includes a first target (71) and a first sensing component (70), the first target (71) having a generally circular shape and being mounted on a hub (74) of the wheel, the first sensing component (70) being mounted on a torque tube (72) of the brake.

8. Aircraft wheel and brake assembly according to Claim 7, in which the first sensing component (70) is mounted on a transverse annular web (73) of the torque tube (72).

9. Aircraft wheel and brake assembly according to Claim 7, in which the hub (74) includes protrusions and itself forms the first target.

10. Aircraft wheel and brake assembly according to one of the previous claims, in which the second measuring device comprises a thermocouple probe (34), and in which temperature compensation is carried out in the data concentrator (40).

11. Aircraft wheel and brake assembly according to one of the previous claims, further comprising a third measuring device arranged to measure wear of the friction member (31).

12. Aircraft wheel and brake assembly according to Claim 11, in which the third measuring device includes a second target and a second sensing component (35; 62), the second target being connected to the friction member, the second sensing component being held by the actuator bracket (24) .

13. Aircraft wheel and brake assembly according to Claim 12, in which the second sensing component (61) is incorporated into or on the housing of the data concentrator (40).

14. Aircraft wheel and brake assembly according to one of the previous claims, in which the data concentrator (40) comprises an antenna for transmitting the digital monitoring signals via wireless transmission.

15. Aircraft landing gear comprising an aircraft wheel and brake assembly according to one of the previous claims.
